# EUROPEAN PATENT SPECIFICATION

(11) **EP 1 510 938 B1**
(45) Date of publication and mention of the grant of the patent: **18.06.2014**
(21) Application number: 03078583.6
(22) Date of filing: 14.11.2003
(51) Int. Cl.: G06F 17/30

(54) **A method of providing a visualisation graph on a computer and a computer for providing a visualisation graph**
Verfahren zur Bereitstellung eines Visualisierungsgraphen auf einem Computer und Computer zur Bereitstellung eines Visualisierungsgraphen
Méthode pour fournir un graphe de visualisation sur un ordinateur et ordinateur pour fournir un graphe de visualisation

(30) Priority: 29.08.2003 EP 03077697
(43) Date of publication of application: 02.03.2005
(73) Proprietor: SAP AG, 69190 Walldorf (DE)
(72) Inventor: Beringer, Joerg, 60431 Frankfurt (DE); Werner, Horst, 69242 Muehlhausen-Rettigheim (DE)
(74) Representative: Müller-Boré & Partner Patentanwälte PartG mbB

(56) References cited:
- EP-A- 0 984 366
- US-A- 5 515 487
- STASZAK, C: "Semantic Network Picture Book" HTTP://WWW.SEMANTICRESEARCH.COM/DOWNLOADS/ WHITEPAPERS/INDEX.PHP, [Online] 2002, pages 1-14, XP002283482 Retrieved from the Internet: URL:http://www.semanticresearch.com/downlo ads/whitepapers/picture_book.pdf> [retrieved on 2004-05-28]
- BOUTIN F ET AL: "Focus-based clustering for multi-scale visualization" PROCEEDINGS SEVENTH INTERNATIONAL CONFERENCE ON INFORMATION VISUALIZATION, 16 July 2003 (2003-07-16), pages 53-58, XP010648478 LONDON, UK
- MUKHERJEA S, FOLEY J D, HUDSON S E: "Interactive clustering for navigating in hypermedia systems" PROCEEDINGS OF THE 1994 ACM EUROPEAN CONFERENCE ON HYPERMEDIA TECHNOLOGY, September 1994 (1994-09), pages 136-145, XP002283483 EDINBURGH, SCOTLAND
- SCOTT MARSHALL: "Methods and Tools for the Visualization and Navigation of Graphs" 2001, UNIVERSITÉ BORDEAUX I , BORDEAUX, FRANCE , XP002284043 * page 10, paragraph 5 - page 13, paragraph 1 * * page 32, last paragraph - page 37, last paragraph * * page 55, paragraph 2 - page 68, last paragraph *
- EADES P, HUANG M L: "Navigating Clustered Graphs using Force-Directed Methods" GRAPH ALGORITHMS AND APPLICATIONS: SPECIAL ISSUE ON SELECTED PAPERS FROM 1998 SYMP. GRAPH DRAWING, vol. 4, no. 3, 2000, pages 157-181, XP002284042 HTTP://WWW.CS.BROWN.EDU/PUBLICATIONS/JGAA/
- BUCHSBAUM A L, WESTBROOK J R: "Maintaining Hierarchical Graph Views" PROCEEDINGS OF THE ELEVENTH ANNUAL ACM-SIAM SYMPOSIUM ON DISCRETE ALGORITHMS, 9 January 2000 (2000-01-09), pages 566-575, XP002284041 SAN FRANCISCO, CALIFORNIA, USA ISBN: 0-89871-453-2
- FLUIT C.; SABOU M.; VAN HARMELEN F.: "Ontology-based Information Visualisation", PROCEEDINGS OF THE INTERNATIONAL CONFERENCE ON INFORMATION VISUALISATION, 25 July 2001 (2001-07-25), pages 546-559, XP002281069,
- BROCKENAUER R ET AL: "Drawing Clusters and Hierarchies", LECTURE NOTES IN COMPUTER SCIENCE/COMPUTATIONAL SCIENCE (CPAIOR 2011), SPRINGER, DE, vol. 2025 / 2001, 1 June 2003 (2003-06-01) , pages 193-227, XP002283485, ISBN: 978-3-540-24128-7
- EADES P ET AL: "Navigating Clustered Graphs using Force-Directed Methods", JOURNAL OF GRAPH ALGORITHMS AND APPLICATIONS AND APPLICATIONS, BROWN UNIVERSITY, DEPT. OF COMPUTER SCIENCE, PROVIDENCE, RI, US, vol. 4, no. 3, 1 January 2000 (2000-01-01) , pages 157-181, XP002284042, ISSN: 1526-1719
- DATABASE INSPEC [Online] THE INSTITUTION OF ELECTRICAL ENGINEERS, STEVENAGE, GB December 1998 MAO LIN HUANG ET AL: 'On-line animated visualization of huge graphs using a modified spring algorithm' Database accession no. 6139866 & JOURNAL OF VISUAL LANGUAGES AND COMPUTING ACADEMIC PRESS UK vol. 9, no. 6, pages 623 - 645 ISSN: 1045-926X
- EADES P ET AL: "Preserving the mental map of a diagram", COMPUGRAPHICS 91. FIRST INTERNATIONAL CONFERENCE ON COMPUTATIONAL GRAPHICS AND VISUALIZATION TECHNIQUES 16-20 SEPT. 1991 SESIMBRA, PORTUGAL,, 1 January 1991 (1991-01-01), pages 34-43, XP009163567,
- EADES P ET AL: "Online animated graph drawing for web navigation", GRAPH DRAWING. 5TH INTERNATIONAL SYMPOSIUM,, 18 September 1997 (1997-09-18), pages 330-335, XP009163503, ISBN: 978-3-540-63938-1
- XIAOBO WANG ET AL: "Generating customized layouts", 20 September 1995 (1995-09-20), GRAPH DRAWING. SYMPOSIUM ON GRAPH DRAWING, (PROCEEDINGS OF GRAPH DRAWING '95 - 20-22 SEPT. 1995 - PASSAU, GERMANY), SPRINGER BERLIN HEIDELBERG, BERLIN, HEIDELBERG, PAGE(S) 504 - 515, XP019189981, ISBN: 978-3-540-60723-6
- MUKHERJEA S ET AL: "Visualizing the World-Wide Web with the Navigational View Builder", COMPUTER NETWORKS AND ISDN SYSTEMS, NORTH HOLLAND PUBLISHING. AMSTERDAM, NL, vol. 27, no. 6, 1 April 1995 (1995-04-01), pages 1075-1087, XP004013209, ISSN: 0169-7552, DOI: 10.1016/0169-7552(95)00023-Z
- SOUGATA MUKHERJEA ET AL: "Requirements and architecture of an information visualization tool", 28 October 1995 (1995-10-28), DATABASE ISSUES FOR DATA VISUALIZATION, SPRINGER BERLIN HEIDELBERG, BERLIN, HEIDELBERG, PAGE(S) 57 - 75, XP019197115, ISBN: 978-3-540-62221-5
- MUKHERJEA S ET AL: 'Interactive clustering for navigating in hypermedia systems' ACM EUROPEAN CONFERENCE ON HYPERMEDIA TECHNOLOGY, PROCEEDINGS 01 September 1994, pages 136 - 145, XP002283483 DOI: 10.1145/192757.192787
- SCOTT MARSHALL: 'Methods and Tools for the Visualization and Navigation of Graphs' PHD THESIS UNIVERSITE BORDEAUX 01 January 2001, page COMPLETE, XP002284043

## Description

### Technical Field

The invention relates to a method of providing a visualisation graph on a computer and a computer for providing a visualisation graph.

### Background to the Invention and Prior Art

Visualisation graphs are tools which allow data to be handled and displayed on a display device according to certain criteria. The primary objective of navigation graphs is to display systems of complex interrelationships between entities, e.g. in a database or the world wide web. Visualisation graphs can be based on a semantic net including all entity types occurring, where the considered entities are linked to each other by various kinds of relations. A visualization graph represents entities as boxes, often referred to as "nodes" of the graph, and relations as lines between the boxes. A common way of solving the problem of graphical layout is applying a physical simulation where all entities are treated as masses repulsing each other and the relations are treated as elastic lines trying to pull connected entities together. By double-clicking on a box, other entities which are directly related to the corresponding entity (but which may not yet in the graph) and their relations to other entities in the graph are included. In some implementations the double-clicked entity then moves to the center of the graph (it becomes the "focus" entity) and other nodes, which are too distant (measured in number of relations on the shortest path) from it are removed from the graph.
It has been found that conventional visualisation graphs suffer drawbacks. One problem with conventional visualisation graphs is that when changes in the graphs are initiated, for example, when a node is double clicked on in order to include further entities related to that node into the graph, conventional repulsion based simulation approaches (which are indeterministic), a problem arises in making room for the entities of the group. In particular, if a node placed close to a second node is "exploded", the repulsion between the entities is so great that the system takes an unacceptable duration to converge. Thus, the user is faced with a graph that is slow to navigate with.

Staszak, C: "Semantic Network Picture Book" discloses a pictorial reference to a specific semantic network implementation used by the Semantica^{™} product line which is a simplified grammar-free semantic network model tailored to enable content specialists to capture and manage knowledge fluidly and to transfer that knowledge to a broad audience.

Scott Marshall: "Methods and Tools for the Visualization and Navigation of Graphs" discloses techniques that have been developed to aid in the analysis of relational data and issues involved in graph visualization. Several methods for graph skeletoning, partitioning, and clustering are discussed as a form of graph abstraction.

Christiaan Fluit et al., "Ontology-based Information Visualisation", 5th International Conference on Information Visualisation, 25-27 July 2001, pages 546-559 discloses a system of providing a visualization graph, wherein the organization of the graph is computed using a variant of the spring embedded algorithm. Objects with the same class membership are grouped in clusters, wherein some of the clusters represent overlaps between classes. Balloon-shaped edges connect object to their most specific classes. Directed edges connect classes and point from specific to generic.

P. Eades et al., "Navigating Clustered Graphs using Force-Directed Methods", Journal of graph algorithms and applications, Brown University, Dept. of Computer Science, vol. 4, no. 3, 1 January 2000, pages 157-181 describes a strategy for the visualization and navigation of graphs comprising three elements: a layered architecture, called CGA, for handling clustered graphs, an online force-directed graph drawing method and animation methods.

P. Eades et al., "Preserving the mental map of a diagram", Computergraphics 91. First International Conference on Computational Graphics and Visualization Techniques, 16-20 Sept. 1991 Sesimbra, Portugal, 1 January 1991, pages 34-43 discloses several mathematical models for the user's "mental map" of a diagram and some layout transformations of the visual representation of the diagram which preserver the "mental map".

M. Huang et al. "Online animated visualization of huge graphs using a modified spring algorithm graph ", Journal of Visual Languages and Computing (1998), 9, pages 623-645 discloses an online drawing method dealing with huge, partially unknown graphs. The method uses a sequence of logical key frames consisting of a drawing of each graph, subgraphs F₁, F₂, .... The change in logical key frames from F₁ to Fᵢ₊₁ is triggered by a mouse click on the new focus node. A smooth transition
between the key frames is achieved by animating a modified force directed algorithm.

Brockenauer R. et al., "Drawing Clusters and Hierarchies", Lecture Notes in Computer Science/Computational Science (CPAIOR 2011), Springer, DE, vol. 2025 / 2001, 1 June 2003, pages 193-227 gives an overview of the various techniques used in drawing clusters and hierarchies. One of the described techniques uses force-directed methods for drawing arbitrarily clustered graphs employing inserting of dummy attractor vertices to the graph, adding attracting forces between the attractor and each vertex of the corresponding cluster and adding repulsive forces between pairs of attractors and between attractors and vertices not belonging to any cluster. Thus, the vertices within a cluster will be closer to each other than before and the distance between the clusters will grow.

XIAOBO WANG et al., "Generating customized layouts", Proc. of Graph Drawing '95, 20-22 September 1995, Passau, Germany, pages 504 - 515 describes a tool for generating customized layouts according to different requirements given by the user or applications. In particular, three layout techniques based on the force-directed placement approach are disclosed, including a revised force-directed placement to draw graphs with vertices of non-trivial size; a divide-and-conquer approach to generate structured layouts; and an integrated approach to support constraints.

S. Mukherjea et al., "Requirements and architecture of an information visualization tool", 28 October 1995, Database Issues for Data Visualization, Springer Berlin Heidelberg, pages 57 - 75 discusses some requirements for an effective information visualization tool, including combining content and structural analysis for data manipulation, integrating navigation and query, giving the user control over visual bindings, multiple simultaneous visualizations, providing detail with context, ease of use, state savings, extensibility and generality with respect to type of information.

S. Mukherjea et al., "Interactive clustering for navigating in hypermedia systems", Proc. ACM European Conference on Hypermedia Technology, 1 September 1994, pages 136-145 discloses a system for interactive clustering for navigating in Hypermedia Systems. Both structure-based and content-based clustering are used. In this system it is possible to interactively specify the clustering conditions and examine the resulting views.

It is an object of the present invention to address those problems encountered in conventional visualisation graphs.

In particular, it is an object of the present invention to visualize complex interrelationships, for example in a semantic net, in a graph, in a flexible way, allowing the display to be used in an efficient manner.

This object is solved by a method of providing a visualisation graph on a computer having the features of claim 1, a computer system for providing a visualisation graph having the features of claim 6, a user terminal having the features of claim 9, and a program storage device having the features of claim 10. Preferred embodiments of the invention are defined in the dependent claims.

### Summary of the Invention

According to a first aspect of the invention, a method of providing a visualisation graph on a computer comprising the steps of:
storing data corresponding to a plurality of entities, wherein a semantic net includes said entities and wherein said entities are linked to each other by a plurality of relations,
in response to a query with respect to an entity selected from said plurality of entities, providing a visualisation graph representing the results of said query, and representing a plurality of entities having a common relation as a first group node on said visualisation graph, and in response to a predetermined stimulus exploding the first group node causing thereby said entities comprised at said first node to be displayed, and in response to a further predetermined stimulus collapsing the first group node causing said graph to restructure so that said entities displayed are replaced by said group node,
the method further comprising the steps of
providing attractors, each attractor attracting said entities to a predetermined sector of the graph depending on their entity type,
providing repulsors, each repulsor exerting a repulsive force between a pair of entities allocated to the predetermined sector,
wherein
the location of each entity on said graph is determined by the sum of attractive and repulsive forces acting on the entity;
said method being characterized in that:
before exploding the first group node in response to said first predetermined stimulus, the first group node increases repulsive force proportionally to the number of entities to be inserted and displayed, wherein the insertion of entities begins when the neighbour nodes have moved sufficiently far away; and
wherein, in response to said first predetermined stimulus, said group node remains in said graph to represent said common relation.

By providing the possibility to explode such groups (i.e. to display all group entities as separate nodes in the graph) by double-clicking and to put them back into the group again, links between nodes representing relations are kept to a minimum which optimises the energy in the graph. Further, it becomes easier for the user to orientate within the graph, thus, improving his navigation of the information represented in the graph.

According to a second aspect of the present invention, there is provided a computer for providing a visualisation graph, said computer comprising:
a storage medium having recorded therein processor readable code processable to provide a visualisation graph,
a database for storing data corresponding to a plurality of entities, wherein a semantic net includes said entities and wherein said entities are linked to each other by a plurality of relations,
a query interface adapted, so that in response to a query with respect to an entity selected from said plurality of entities, a visualisation graph is provided representing the results of said query, wherein said computer comprises a code including:
   representation code processable to represent a plurality of entities having a common relation as a first group node on said visualisation graph, and in response to a predetermined stimulus exploding the first group node causing said entities comprised at said node to be displayed, and in response to a further predetermined stimulus collapsing the first group node causing said graph to restructure so that said entities displayed are replaced by said node, allocator code processable to allocate the entity to a predetermined sector of a graph depending on their entity type, the allocator code comprising
   a plurality of attractor codes, each attractor code processable to model an attractive force which attracts said entities to a predetermined sector of the graph depending on their entity type, and
   a plurality of repulsor codes, each repulsor code processable to model a repulsive force between a pair of entities allocated to the predetermined sector,
   the attractor and the repulsor code being processable such that the location of each entity on said graph is determined by the sum of attractive and repulsive forces acting on the entity; said computer being characterized in that:
      the representation code is processabe such that before exploding the first group node in response to said first predetermined stimulus, the first group node increases repulsive force proportionally to the number of entities to be inserted and displayed, wherein the insertion of entities begins when the neighbour nodes have moved sufficiently far away; and
      wherein said representation code is processable in response to said first predetermined stimulus, to cause said node to remain in said graph to represent said common relation.

According to a third aspect of the present invention, there is provided a user terminal comprising means operable to perform any of the methods according to the first aspect of the present invention.

According to a fourth aspect of the present invention, there is provided a program storage device readable by a processing apparatus, said device embodying a program of instructions executable by the processor to perform any of the methods according to the first aspect of the present invention.

### Brief description of the drawings

In order that the invention may be more fully understood embodiments thereof with now be described by way of example only, with reference to the figures in which:
Figure 1 shows details of grouping in a visualisation graph;
Figure 2 shows further details of the visualisation graph shown in Figure 1;
Figures 3-6 show visualisation graphs according to embodiments of the present invention;
Figure 7 shows a visualisation graph according to a further embodiment of the present invention;
Figure 8 shows further details of the visualisation graph shown in Figure 7; and
Figure 9 shows a typical computer for carrying out the methods according to embodiments of the invention.

### Description of the Preferred embodiments

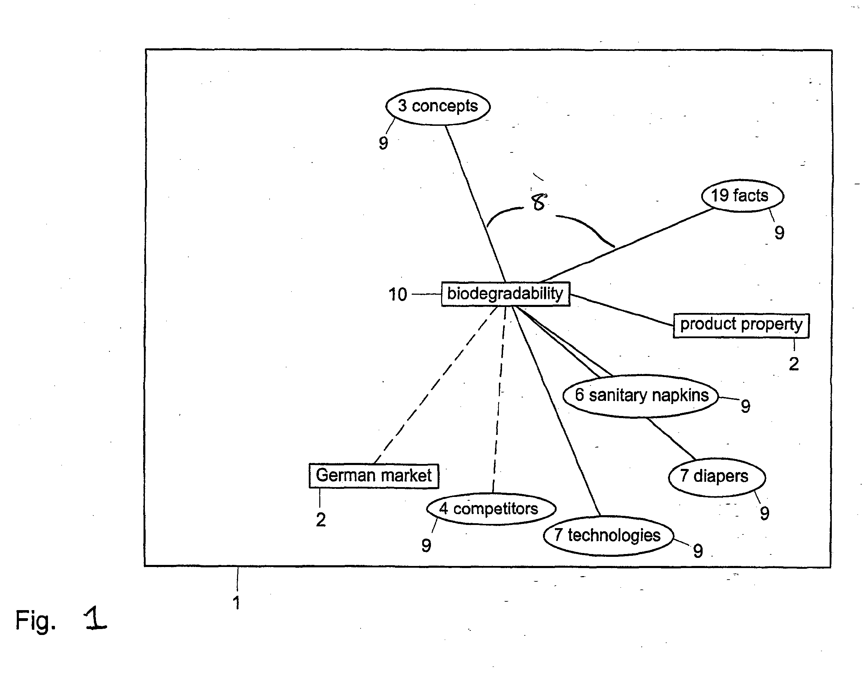

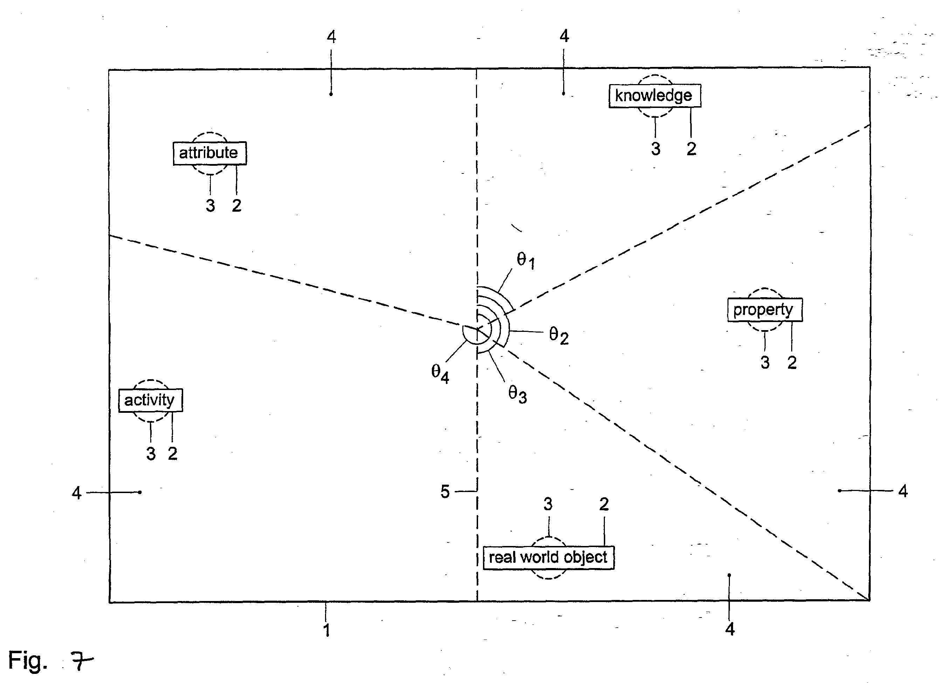

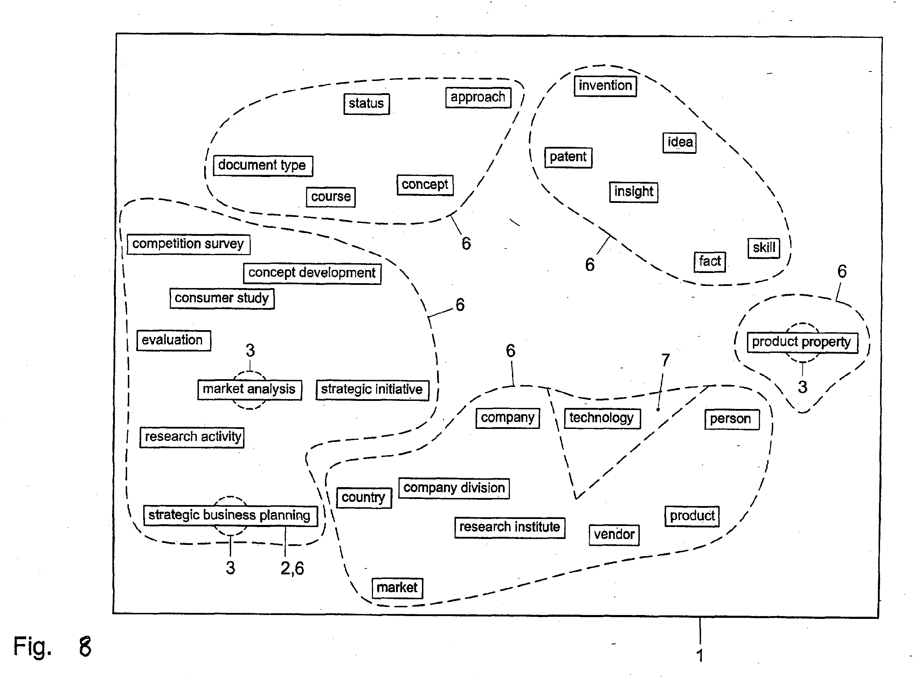

Figures 1-8 show visualisation graphs according to examples of embodiments of the present invention. Figure 7 shows details of a visualisation graph 1 wherein a plurality of entities 2 are displayed. Each entity is represented by a square box. The entities 2 shown in Figure 7 are represent top level types, referred to hereinafter as types. Figure 8 shows details of a visualisation graph 1 wherein a plurality of sub-entities 4 are displayed. Each sub-entity 4 is represented by a square box. The sub-entities 4 shown in Figure 8 represent second level entity types, hereinafter referred to as sub-types.
The entities 2 and sub-entities are typically modelled as a mass. There is a repulsive force exerted by a repulsor between each pair of entities. The repulsive force may be inversely proportional to the distance or the square of the distance, or any other inverse relationship. The relations 8 between entities (not shown in Figure 7) are modelled as springs, typically linear springs. The model provides damping to ensure that the system converges. When energy is put into the system, for example, when entities 2,4 are introduced into the graph or moved, the system is modelled to adopt the lowest energy level. For each entity or node (refer to Figure 1), the distance and repulsive force is calculated from other entities and nodes. The forces are added to obtain a force vector. The reaction of the system in terms of acceleration and deceleration is dependent on the force vector.

Groups of entities sharing at least one relation 8 may be bundled together and displayed as a node 9, as seen in Figure 1. Nodes and entities may be displayed together on the same graph as seen in Figure 1, wherein relations 8 common to entities and nodes are displayed as a line linking the appropriate entities and/or nodes.

Any particular graph may be arranged so that the relations 8 with respect to a particular entity 2, 4 or node 9 are displayed. In this case, the entity 2, 4 or node 9 in question, is referred to as the focus entity or node 10 and is typically displayed in a central region of the graph.

### 1. Grouping

Figure 1 shows grouping in a visualisation graph according to an example of an embodiment of the present invention. In particular, Figure 1 shows a focus entity 10 with related entities 2 and those comprised in nodes 9, clustered by entity type. The dashed lines indicate indirectly related items, "competitors", "market", selected due to user preferences.

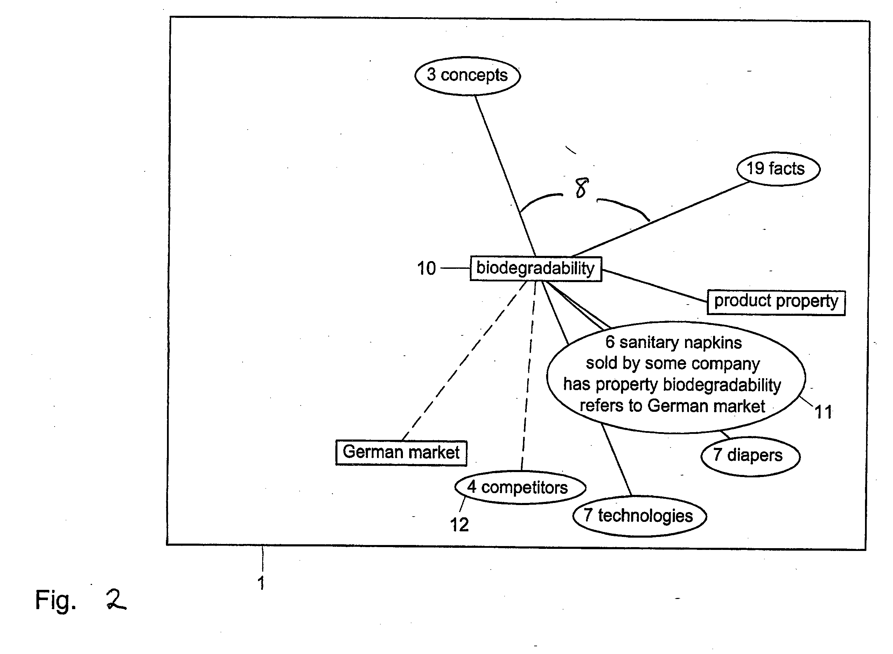

Figure 2 shows further details of the visualisation graph shown in Figure 1. In particular, Figure 2 depicts a display of a group's common relations 8 as indicated when a mouse, or other indicator adapted for use with a computer, is passed over the desired node (MouseOver).
As shown in Figures 1 and 2, to avoid a visualisation graph 1 getting crowded and the data complex to navigate as a result, groups of entities 9 with common relations 8 are bundled and displayed as group nodes 9 (Fig. 1). The common relation 8 of the entities of a particular group node defines the focus entity. Of all possible groupings those are selected which result in the most even distribution of entities 2 (also referred as elements) over the groups and which form groups of entities 2 (elements) which have at least two relations 8 in common.
The common relations 8 may be explicitly assigned to each entity in a group, but they may also be abstractions of the individual relations 8. This embodiment is shown in Fig. 2, where the common relations 8 of the group " sanitary napkins" are displayed: each of these products has got a relation 8 "refers to German market" and a relation 8 "has property biodegradability". These are direct relations 8. For example, two products in the group are sold by the company having access to the graph, the remaining products are sold by competing companies. Since the semantic net contains the information that all those are companies, a common abstract relation 8 "is sold by some company" is created, which also characterizes the elements of the group.
The selection code is dynamic resulting in a dynamic grouping of the entities. That is, depending on certain criteria such as the context, the selection and abstraction, if applied, may at different times provide different groupings.

To further improve the predictability of the selection, facets are introduced. In particular, in order to increase the predictability with regard to what common relation 8 will be chosen as criterion to form groups, the user may define facets for each entity type. "Types" are discussed in more detail below with reference to Figures 7 and 8. Facets are predefined groups which are characterized by the entity type of their elements or the kind of relation 8 which connects their elements to the focus entity.
In the example, the following facets have been defined for product properties: knowledge, products, technologies, persons, life cycle phases, companies, ideas, insights, facts, concepts, approaches, activities.

If facets are defined, all entities related to the focus entity will be sorted into the corresponding facets (groups) and the dynamic grouping algorithm is used only to subdivide these facets into smaller groups (if possible).

### 2. Exploding Groups

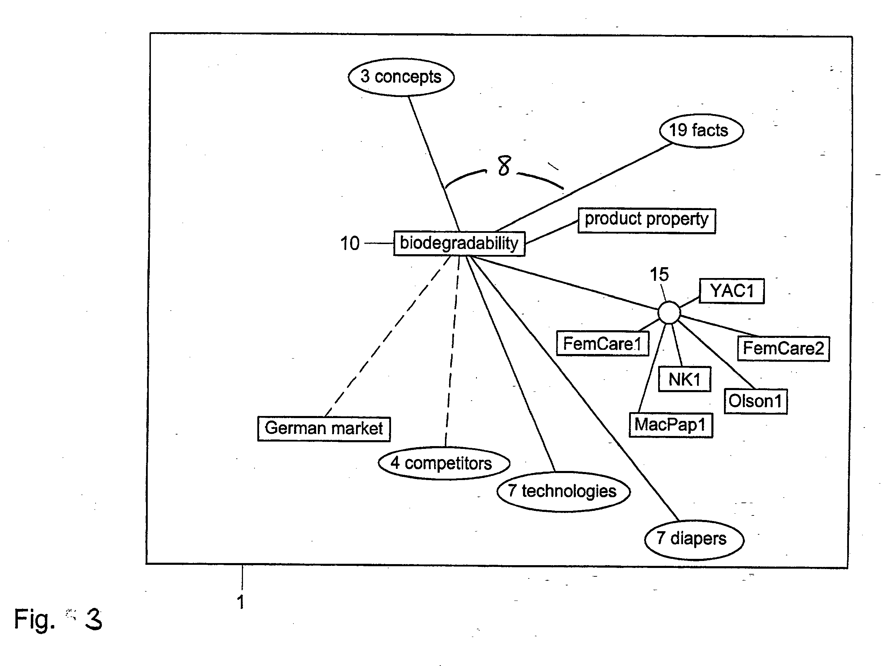

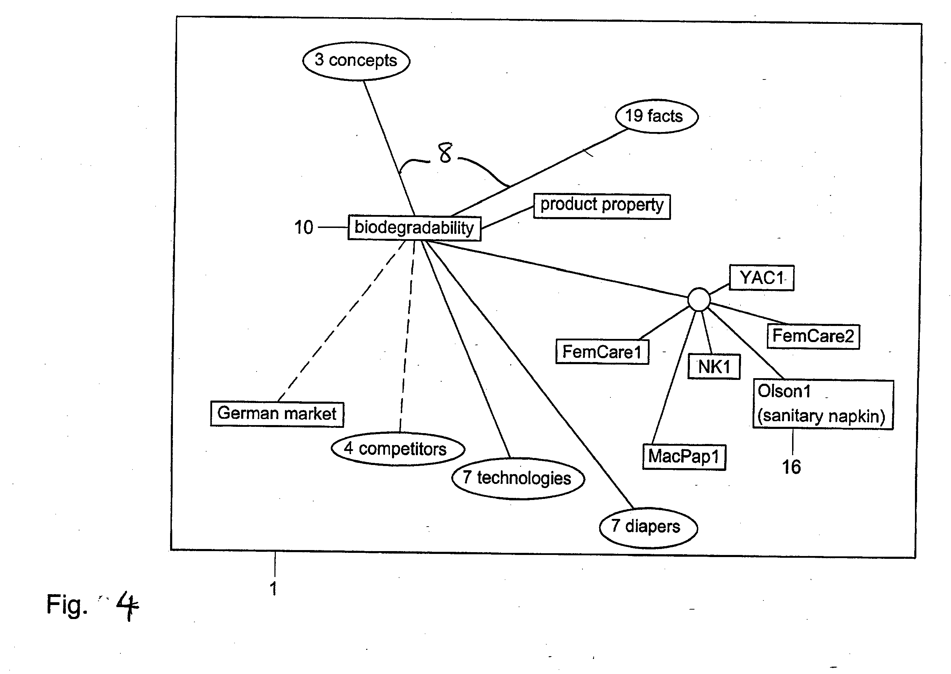

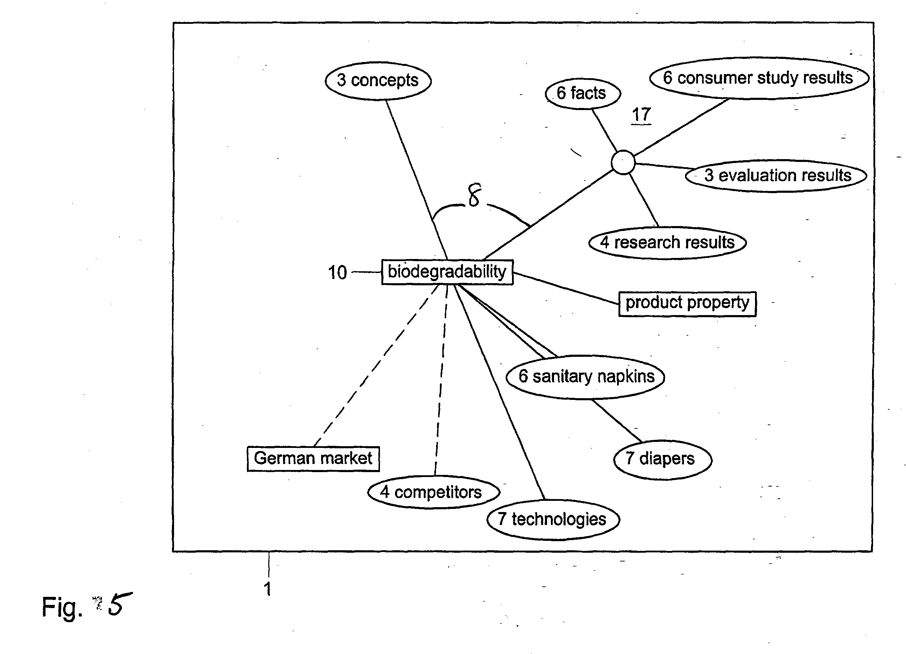

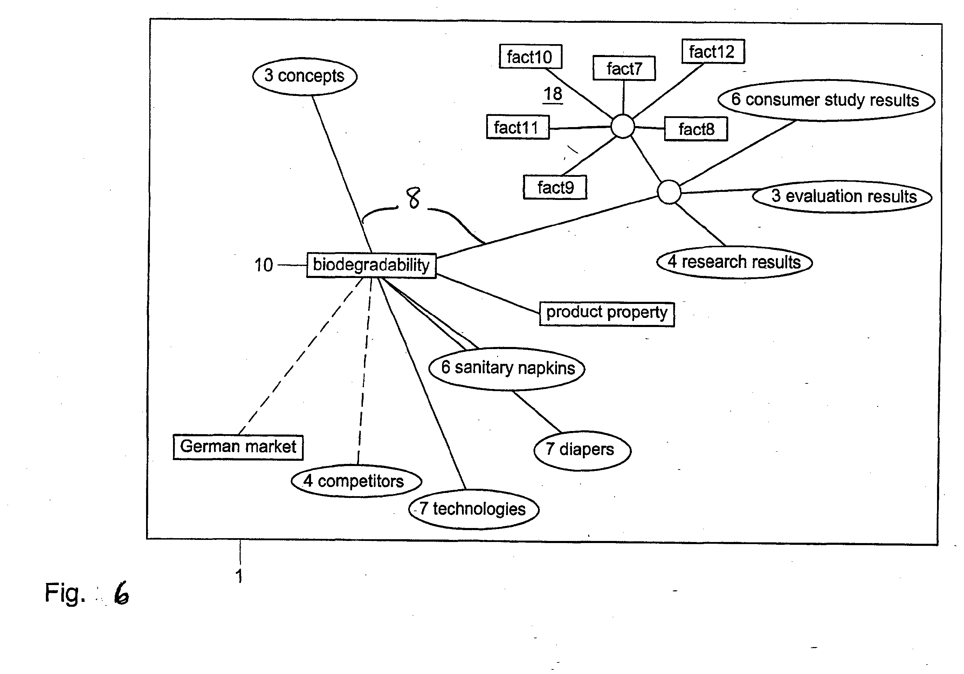

Figures 3-6 show visualisation graphs according to embodiments of the present invention. In particular, Figure 3 depicts an exploding group 15, wherein association of members to group remains visible. Figure 4 depicts a display of entity type 16 as viewed with the MouseOver function. Figure 5 depicts an explosion of a group into subgroups 17. Figure 6 depicts the explosion of a subgroup 18.
As mentioned, in contrast to conventional visualisation graphs, the present invention allows the formation of groups in a 2D visualisation graph whilst keeping it clear. According to an embodiment of the present invention this is achieved by keeping the space required for the nodes minimal and the origin of the added nodes traceable. Further, the graph is rearranged in a smooth way to avoid confusion of the user. According to an embodiment of the invention, the following steps are taken:
- before exploding, the group node increases repulsive force proportionally to the number of entities to be inserted in order to make room for the new nodes. The actual insertion begins, when the neighbour nodes have moved sufficiently far away.
- Although the new nodes inserted into to the graph have a direct relation 8 to the "focus" node 10, this relation 8 is only displayed indirectly: the new entities are connected to the group node which remains in the graph as "bundler" without label and establishes the relation 8 to the "focus" node 10. Thus the number of lines connected to the focus node 10 remains low.
- While a group "bundler" node 11 doesn't have a label in order to save space, the group's characteristics are shown when the user moves the mouse pointer over the "bundler" node 11, in the same way as shown in Fig. 2.
- Double-clicking a "bundler" node 11 causes the group to collapse again into one node.
- The recursive explosion and collapsing of subgroups 18 is also possible (Fig. 5,6).
The resulting representation looks and behaves similar to a "tree view control". The main difference is that a tree view represents an existing hierarchical structure, whereas the group nodes in the graph dynamically create a hierarchy-like structure in order to get a clearer graph layout. Also the problem of finding a 2D graph layout does not exist for conventional tree view controls.

In an embodiment of the present invention, in response to the first predetermined stimulus, for example, as instigated by a double mouse click, the node 9 remains in the graph to represent the common relation 8. As a result even in the "exploded" state, the "group node" is kept in the graph and represents the common relations 8, while the single group members (entities) have a link to the group node. In a further embodiment, the entities are linked to a further entity 2 or node 9 via a link which represents a relation 8 which may not be common to all entities linked to said first node. By providing in addition, links which may not be common to all members of the group (linked by a common relation 8 to said first node), the user has access to further navigable information.

### 3. Indirect Relatedness

In contrast to conventional visualisation graphs, in a further embodiment of the present invention, the visualisation graph layout is such that the number of nodes is kept low without missing out potentially relevant information.

According to an embodiment of the present invention this is achieved in the following way: when the focus of a graph changes, new related entities are inserted, and therefore other entities have to be removed. In conventional visualisation graphs, only nodes in the graph are kept which have a distance d<dₘₐₓ from the focus node, where the distance is the number of relations 8 on the shortest path between a node and the focus node. Since the number of nodes usually increases exponentially with dₘₐₓ, a value of 1 or 2 is appropriate for most purposes.
In order to enhance navigation of the visualisation graph, entities of certain types may be included in the graph even if they are far more distant to the focus, if they are considered to be of special interest in the current context either due to their entity type or due to the kind of relations 8 linking them to the focus node.
The context information in this case can be made up, but is not limited, from the following components:
- Current user's general preferences,
- Context information attached to the "focus" node, and /
- Current user's current role and/or session history.

In Figures 1-6, the entity 2 "German market" and a group of "four competitors" 12 appear in the graph connected with dashed lines to the focus node 10. These entities 12 have no direct relation 8 to the product property "biodegradability", but are related via some products. In this case, the system has been told that if an entity of the type "product property" is in the focus, markets and competitors are of special interest. So all markets and competitors in a certain distance d <4 to the entity "biodegradability" are selected and inserted into the graph.
More sophisticated algorithms may be applied to find entities of special interest and it is even possible to let the user create context specific algorithms by means of a scripting language or macro recorder.

In a further embodiment of the present invention, a method includes the further steps of: storing 24 data corresponding to a plurality of entities and/or nodes 2, 9, wherein a semantic net includes the entities and/or nodes 2, 9 and wherein the entities and/or nodes 2, 9 are linked to each other by a plurality of relations 8, generating a query, performing the query on the data, and outputting at least two of the plurality of data in the form of a visualisation graph 1 representing the results of the query, wherein the graph 1 has a focus entity or node 10 defined by a user or said query, and using context information to determine at least one entity and/or node 2, 9 to be output in said results which is indirectly related to said focus 10. By providing the possibility to display entities which are indirectly related to the "focus" entity based on the current context and user preferences, the user is able to collect additional information even if there is no direct relationship between entities. Thus, allowing the user to "jump" from context to context within the graph. The present invention allows a user to find how large amounts of data are related. The user is able to navigate and explore knowledge domains in a visual way.

### 4. Graph Sectors and Attractors

Figures 7 and 8 show examples of further embodiments of the present invention. In particular, Figure 7 shows the position of attractors for top-level entity types, also referred to as "types" and Figure 8 shows the approximate position of attractors for second-level entity types, also referred to as "sub-types". In one embodiment of the present invention attractors are provided which attract said entities to a predetermined sector of the graph depending on their entity type. By introducing attractors which pull entities to certain sectors of the screen depending on their entity type (thus the name "360° Navigation Graph"), the location of each entity can be predicted without having to carry out a complete, and thus, very complex deterministic approach.

Figure 7 shows details of a visualisation graph 1 wherein a plurality of entities 2 are displayed. Associated with each entity is an attractor 3. The attractors do not appear on the graph to a user, but are schematically depicted as dotted circles 3 .
To facilitate orientation, certain types (or kinds) of entities 2 are arranged to appear in the same sector 4 of the graph 1.
According to further embodiments of the present invention, a 360°-approach is proposed.
The first embodiment based on a non-deterministic approach, using attractors and repulsors may be combined with a deterministic approach using a dynamic, but deterministic, subdivision of the screen and screen areas into sectors and sub-sectors, wherein entity types are allocated to sectors and entity sub-types are allocated to sub-sectors, respectively.

The first non-deterministic embodiment is now described in more detail. To facilitate orientation certain kinds, that is types, of entities 2 are arranged to appear in the same sector 4 of the graph. This is done by introducing invisible (that is not visible to a user of the graph) attractors 3 to the graph for each entity type. In the example, shown in Figure 1 the types are: "attribute", "knowledge", "property", "real world object" and "activity". These may be referred to as top-level entity types. The angle theta 1- theta 4 of each attractor 3 with respect to a reference may be set by customizing and is inherited by all subtypes (refer to Figure 8 which depicts subtypes 6, wherein subtypes are entities 2 which have a type falling within the scope of a top-level type. For example, in Figure 8 "strategic business planning" is a sub-type of "activity". It is seen in Figures 7 and 8 that within each sector 4, 7 the entities to be placed are arranged in Figure 7 in an ellipse, whereas in Figure 8, because there are more entities to be arranged, and thus force vectors are more complex, in each sector 4, the sub-type entities, rather than being arranged in an ellipse are arranged in a more nebulous arrangement. Further, because the force vectors are more complex in Figure 8, where a large number of entities are located in a relatively small area, the location of each entity does not correspond exactly to the location of its respective attractor, because the repulsive forces between entities also play a role in the location of the entity. Thus, Figure 8 shows the approximate location of the attractors 3 as dotted lines.
It will be understood that the negotiation of sector size determined in accordance with the number of entities and how they are to be distributed causes the graph to have a particular fuzziness. As mentioned, this is achieved by the provision of the attractors 3. In contrast, in conventional graphs, there is no flexibility in the system to expand or contract a sector beyond or within its boundary, respectively, should the need arise when entities are either added or taken away from the sector.

The deterministic approach is now described.

According to the deterministic approach, the following steps are carried out: the display, which is typically a computer screen, is divided into sectors 4 assigned to the respective top-level entity types 2. The size of each sector depends on the number of entities or nodes it contains, including all visible subtypes 6. For example, if a larger number of entities are to be placed in a particular sector, that sector will become larger. Then the sectors are recursively divided into subtype sectors 7 and again, their relative size depends on the number of entities they contain. The segmentation of the screen is repeated each time that entities are added to or removed from the graph 1. The distance of the entities or nodes to the center of the graph is an oscillating function of the angle in order to avoid collisions (which in the simulative approach are avoided by the repulsive force between entities). It will be understood that a combination of the first embodiment with the deterministic approach may be implemented.

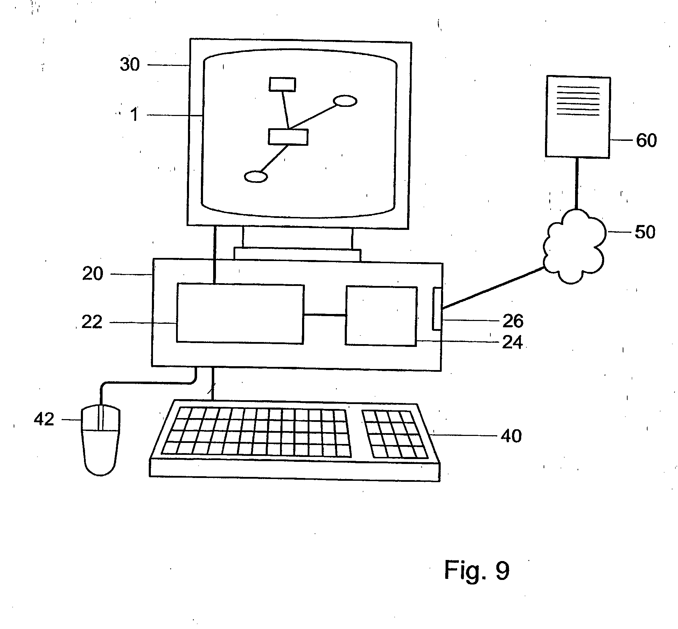

Figure 9 shows a typical computer arrangement for carrying out the methods according to embodiments of the invention. In particular, Figure 9 shows a computer 20 including a central processing unit (CPU) 22. The computer further includes a storage medium, which may be located in the CPU 22 and/or elsewhere. In the storage medium processor readable code is stored, which may be read by the CPU 22 to provide a visualisation graph. Various codes may be stored the code may include: selection code processable to select those entities from the plurality of entities having a common relation 8 and storing the selected entities as a plurality of groups, representation code processable to represent the groups on the graph as a plurality of nodes, wherein only those relations 8 which all of the nodes have in common are represented, abstraction code processable to abstract the relations 8 to identify the common relation 8. The code may further include representation code processable to represent a plurality of entities 2 having a common relation 8 as a node 9 on the visualisation graph 1, and in response to a predetermined stimulus causing the entities 2 comprised at the node to be displayed, and in response to a further predetermined stimulus causing the graph to restructure so that the entities 2 displayed are replaced by the node 9.
Also provided is a display device 30, such as a screen, for displaying a visualisation graph 1.
The user may use a keyboard 40, mouse 42 or other operating device to communicate with the computer 20 and to instruct the computer to perform a query. The query may be generated automatically. It may alternatively be generated by a user. Context information may be defined in the query. Alternatively, it may not form part of the query, and may be defined in some other way, for example, by user preferences.

In one embodiment, a computer 20 is provided for providing a visualisation graph 1, the computer 20 may comprise: a database 24, 60 for storing data corresponding to a plurality of entities and/or nodes 2, 9, wherein a semantic net includes said entities and/or nodes 2, 9 and wherein said entities and/or nodes 2, 9 are linked to each other by a plurality of relations 8, a storage medium 22 having recorded therein processor readable code processable to provide a visualisation graph 1, said code including a query code processable to perform a query on said database, an output device 30 for outputting at least two of said plurality of data in the form of a visualisation graph 1 representing the results of said query, wherein said graph 1 has a focus entity or node 10 defined by a user or said query, wherein said code further includes context code processable to express context information which is processable to determine at least one entity and/or node to be output in said results which is indirectly related to said focus 10.

Further, the context code may be processable to allow at least one entity 2 and/or node 9 to be output in said results which are indirectly related by more than two relations 8. The context code may also be processable to enable identification of at least one entity and /or node 2, 9 having a particular interest with respect to the focus 10, and/or may be processable to identify a particular interest on the basis of an entity 2 or node 9 type or due to the relations 8 linking the entity and/or node 2, 9 to the focus 10. Further, the context code may be determined by any or a combination of: at least one predetermined user preference, information associated with said focus, or a user's current role and/or session history query.

In further embodiments of the present invention, further codes may be stored, such as: an allocator code processable to allocate the entities to a predetermined sector of the graph depending on their entity type, additional entity allocator code processable so that if an additional entity of a particular entity type is stored in a storing step, the location on the graph of the allocated entities are adapted in accordance with the additional entity. The allocator code may include a plurality of attractor codes processable to attract the entities to a predetermined sector of the graph depending on their entity type, respectively, a plurality of repulsor codes processable to repulse the entities allocated to the predetermined sector from one another. The attractor codes and the repulsor codes are processable so that the location of an entity on a graph is determined by the sum of the influence exerted on the entity by the attractor code and the repulsor codes.
The allocator code may further comprise dividing code processable to divide the graph into sectors, wherein an entity is allocated to one of the sectors according to its entity type, and further dividing code processable to further divide the sectors into sub-sectors, wherein an entity is allocated to one of the sub-sectors in accordance with its entity sub-type, wherein the size of the sectors and the sub-sectors is determined in accordance with the number of entities of a particular type allocated to the sector and the number of entities of a particular sub-type allocated to the sub-sector, respectively.
The allocator code may also include repeater code processable to activate the dividing code if the number of entities to be displayed on a graph changes.
The processable code may further comprise selection code processable to select those entities from the plurality of entities having a common relation 8 and storing the selected entities as a plurality of groups, representation code processable to represent the groups on the graph as a plurality of nodes, wherein only those relations 8 which all of the nodes have in common are represented.

In one embodiment, the database 24 in which data for building the graph is stored, may be located locally at the computer 20. Alternatively or in addition, the database 60 or an additional database may be located remotely from the computer 20. In such an embodiment, the computer is provided with means to remotely access a remote database. For example, using a modem 26 connected via the internet 50 or other network or communications link to the remote database 60. Although the embodiment shown in Figure 9 is a typical internet configuration, other configurations may also be possible. As mentioned, a stand-alone configuration is also envisaged. Further, the database may be distributed over more than one computer. Whilst parts of the processing may be performed on the user's computer, other parts of the processing may be performed remotely at a remote computer.

In the embodiments of the present invention described above, the visualisation graph is concerned with aspects of company dealing with personal hygiene products. However, the invention is not limited in this respect. The present invention finds application in any sphere where data is to be navigated. In particular, where complex interrelationships of data are to be navigated. Further applications are found where data in one or more databases is somehow related to one another. Further applications include internet applications, where metadata is accessed and used.
The expression "visualisation graph" is intended to cover visual representations, such as navigation graphs and other such tools.

Whilst specific embodiments of the invention have been described above, it will be appreciated that the invention may be practiced otherwise than as described. The description is not intended to limit the invention.

## Claims

1. A method of providing a visualisation graph on a computer comprising the steps of:
storing data (24) corresponding to a plurality of entities (2), wherein a semantic net includes said entities (2) and wherein said entities (2) are linked to each other by a plurality of relations (8),
in response to a query with respect to an entity (2) selected from said plurality of entities (2), providing a visualisation graph (1) representing the results of said query, and
representing a plurality of entities (2) having a common relation (8) as a first group node (9) on said visualisation graph (1), and in response to a predetermined stimulus exploding the first group node (9) causing thereby said entities (2) comprised at said first group node (9) to be displayed, and in response to a further predetermined stimulus collapsing the first group node (9) causing thereby said graph (1) to restructure so that said entities (2) displayed are replaced by said group node (9),
the method further comprising the steps of
providing attractors (3), each attractor attracting said entities (2) to a predetermined sector (4) of the graph (1) depending on their entity type,
providing repulsors exerting a repulsive force between each pair of entities (2) allocated to the predetermined sector (4),
wherein
the location of each entity on said graph (1) is determined by the sum of attractive and repulsive forces acting on the entity (2);
said method being **characterized in that**
before exploding the first group node (9) in response to said first predetermined stimulus, the first group node (9) increases repulsive force proportionally to the number of entities to be inserted and displayed, wherein the insertion of entities begins when the neighbour nodes have moved sufficiently far away; and
wherein, in response to said first predetermined stimulus, said group node (9) remains in said graph (1) to represent said common relation (8).

2. A method according to claim 1, wherein said entities (2) having a common relation (8) are linked to a further entity (2) or node (9) via a link which represents a relation which may not be common to all entities (2) linked to said first group node (9).

3. A method according to any preceding claim, comprising the further step of:
wherein said graph (1) has a focus entity or node (10) defined by a user or said query, and using context information to determine at least one entity and/or group node (9) to be output in said results which is indirectly related to said focus entity or node (10).

4. A method according to any preceding claim, comprising the further steps of selecting those entities (2) from said plurality of entities having at least one common relation (8) thereby forming groups of entities, each group of entities comprising entities sharing at least one common relation, representing each of said groups on said graph as a corresponding group node (9), and representing only those relations (8) which all of said group nodes (9) have in common.

5. A method according to any preceding claim, wherein said selecting step includes abstracting said relations (8) to find said common relation (8).

6. A computer for providing a visualisation graph, said computer comprising:
a storage medium (22) having recorded therein processor readable code processable to provide a visualisation graph,
a database (24, 60) for storing data corresponding to a plurality of entities (2),
wherein a semantic net includes said entities (2) and wherein said entities (2) are linked to each other by a plurality of relations (8),
a query interface (40, 42) adapted, so that in response to a query with respect to an entity (2) selected from said plurality of entities, a visualisation graph (1) is provided representing the results of said query, wherein
said computer comprises a code including:
representation code processable to represent a plurality of entities having a common relation (8) as a first group node (9) on said visualisation graph (1), and in response to a predetermined stimulus exploding the first group node (9) causing thereby said entities (2) comprised at said group node (9) to be displayed, and in response to a further predetermined stimulus collapsing the first group node (9) causing said graph (1) to restructure so that said entities (2) displayed are replaced by said group node (9),
allocator code processable to allocate the entity to a predetermined sector of a graph depending on their entity type, the allocator code comprising
a plurality of attractor codes, each attractor code processable to model an attractive force which attracts said entities (2) to a predetermined sector (4) of the graph (1) depending on their entity type, and
a plurality of repulsor codes, each repulsor code processable to model a repulsive force between a pair of entities (2) allocated to the predetermined sector (4),
the attractor and the repulsor code being processable such that the location of each entity on said graph (1) is determined by the sum of attractive and repulsive forces acting on the entity (2);
said computer being **characterised in that** the representation code is processabe such that before exploding the first group node (9) in response to said first predetermined stimulus, the first group node (9) increases repulsive force proportionally to the number of entities to be inserted and displayed, wherein the insertion of entities begins when the neighbour nodes have moved sufficiently far away; and
wherein said representation code is processable in response to said first predetermined stimulus, to cause said node (9) to remain in said graph to represent said common relation (8).

7. A computer according to claim 6, wherein said entities (2) are linked to a further entity (2) or node (9) via a link which represents a relation which may not be common to all entities (2) linked to said first node (9).

8. A computer according to any of preceding claims 6 or 7, wherein
the storage medium (22) having recorded therein processor readable code processable to provide a visualisation graph (1), said code including a query code processable to perform a query on said database (24, 60),
and wherein said computer further comprises
an output device (30) for outputting at least two of said plurality of data in the form of a visualisation graph (1) representing the results of said query, wherein said graph (1) has a focus entity or node (10) defined by a user or said query, wherein said code further includes context code processable to express context information which is processable to determine at least one entity and/or group node (2, 9) to be output in said results which is indirectly related to said focus entity or node (10).

9. A user terminal comprising means operable to perform the method according to any one of the preceding claims 1-5.

10. A program storage device readable by a processing apparatus, said device embodying a program of instructions executable by the processor to perform the steps of any one of claims 1-5.

## Patentansprüche

1. Verfahren zum Bereitstellen eines Visualisierungsgraphen auf einem Computer, umfassend die Schritte:
Speichern von Daten (24), die einer Mehrzahl von Entitäten (2) entsprechen,
wobei ein semantisches Netz die Entitäten (2) enthält und wobei die Entitäten (2) durch eine Mehrzahl von Beziehungen (8) miteinander verbunden sind,
ansprechend auf eine Anfrage bezüglich einer Entität (2), die aus der Mehrzahl von Entitäten (2) ausgewählt ist, Bereitstellen eines Visualisierungsgraphen (1), der die Ergebnisse der Anfrage darstellt, und
Darstellen einer Mehrzahl von Entitäten (2) mit einer gemeinsamen Beziehung (8) als einen ersten Gruppenknoten (9) an dem Visualisierungsgraphen (1), und ansprechend auf einen vorbestimmten Reiz, Explodieren des ersten Gruppenknotens (9), wodurch bewirkt wird, dass die Entitäten (2), die an dem ersten Gruppenknoten (9) enthalten bzw. umfasst sind, angezeigt werden,
und ansprechend auf einen weiteren vorbestimmten Reiz, Kollabieren des ersten Gruppenknotens (9), wodurch bewirkt wird, dass sich der Graph (1) restrukturiert, so dass die angezeigten Entitäten (2) durch den Gruppenknoten (9) ersetzt werden,
wobei das Verfahren ferner die Schritte umfasst
Bereitstellen von Attraktoren (3), wobei jeder Attraktor die Entitäten (2) zu einem vorbestimmten Sektor (4) des Graphen (1) abhängig von ihrer Entitätenart anzieht,
Bereitstellen von Repulsoren, die eine Abstoßungskraft zwischen jedem Paar Entitäten (2) ausüben, die dem vorbestimmten Sektor (4) zugeteilt sind,
wobei
die Lage jeder Entität an dem Graphen (1) durch die Summe von Anziehungs- und Abstoßungskräften bestimmt wird, die auf die Entität (2) wirken;
wobei das Verfahren **dadurch gekennzeichnet ist, dass**
vor dem Explodieren des ersten Gruppenknotens (9) ansprechend auf den ersten vorbestimmten Reiz der erste Gruppenknoten (9) eine Abstoßungskraft proportional zu der Anzahl von Entitäten erhöht, die einzusetzen und anzuzeigen sind, wobei das Einsetzen von Entitäten beginnt, wenn sich die Nachbarknoten ausreichend weit weg bewegt haben; und
wobei, ansprechend auf den ersten vorbestimmten Reiz, der Gruppenknoten (9) in dem Graphen (1) bleibt, um die gemeinsame Beziehung (8) darzustellen.

2. Verfahren nach Anspruch 1, wobei die Entitäten (2) mit einer gemeinsamen Beziehung (8) mit einer weiteren Entität (2) oder Knoten (9) über eine Verbindung verbunden sind, die eine Beziehung darstellt, die nicht allen Entitäten (2) gemeinsam sein muss, die mit dem ersten Gruppenknoten (9) verbunden sind.

3. Verfahren nach einem der vorhergehenden Ansprüche, ferner umfassend den Schritt:
wobei der Graph (1) eine Fokusentität oder -knoten (10) aufweist, die bzw. der von einem Benutzer oder der Anfrage definiert wird, und Kontextinformationen verwendet, um zumindest eine in den Ergebnissen auszugebende Entität und/oder Gruppenknoten (9) zu bestimmen, die bzw. der indirekt die Fokusentität oder -knoten (10) betrifft.

4. Verfahren nach einem der vorhergehenden Ansprüche, umfassend die weiteren Schritte des Auswählens derjenigen Entitäten (2) aus der Mehrzahl von Entitäten, die zumindest eine gemeinsame Beziehung (8) aufweisen, wodurch Gruppen von Entitäten gebildet werden, wobei jede Gruppe von Entitäten Entitäten umfasst, die zumindest eine gemeinsame Beziehung teilen, des Darstellens jeder der Gruppen an dem Graphen als einen entsprechenden Gruppenknoten (9) und des Darstellens nur derjenigen Beziehungen (8), die alle der Gruppenknoten (9) gemeinsamen haben.

5. Verfahren nach einem der vorhergehenden Ansprüche, wobei der Auswählschritt das Abstrahieren der Beziehungen (8) beinhaltet, um die gemeinsame Beziehung (8) zu finden.

6. Computer zum Bereitstellen eines Visualisierungsgraphen, wobei der Computer umfasst:
ein Speichermedium (22) mit einem darauf aufgezeichneten prozessorlesbaren Code, der verarbeitbar ist, um einen Visualisierungsgraphen bereitzustellen,
eine Datenbank (24, 60) zum Speichern von Daten, die einer Mehrzahl von Entitäten (2) entsprechen, wobei ein semantisches Netz die Entitäten (2) enthält und wobei die Entitäten (2) durch eine Mehrzahl von Beziehungen (8) miteinander verbunden sind,
eine Anfrageschnittstelle (40, 42), die so angepasst ist, dass ansprechend auf eine Anfrage bezüglich einer Entität (2), die aus der Mehrzahl von Entitäten ausgewählt ist, ein Visualisierungsgraph (1) bereitgestellt wird, der die Ergebnisse der Anfrage darstellt, wobei
der Computer einen Code umfasst, der enthält:
einen Darstellungscode zum Darstellen einer Mehrzahl von Entitäten mit einer gemeinsamen Beziehung (8) als einen ersten Gruppenknoten (9) an dem Visualisierungsgraphen (1), und ansprechend auf einen vorbestimmten Reiz,
Explodieren des ersten Gruppenknotens (9), wodurch bewirkt wird, dass die Entitäten (2), die an dem ersten Gruppenknoten (9) enthalten bzw. umfasst sind, angezeigt werden, und ansprechend auf einen weiteren vorbestimmten . Reiz, Kollabieren des ersten Gruppenknotens (9), wodurch bewirkt wird, dass sich der Graph (1) restrukturiert, so dass die angezeigten Entitäten (2) durch den Gruppenknoten (9) ersetzt werden,
Verteilercode, der verarbeitbar ist, um die Entität einem vorbestimmten Sektor eines Graphen abhängig von ihrer Entitätenart zuzuteilen, wobei der Verteiler umfasst
eine Mehrzahl von Attraktorcodes, wobei jeder Attraktorcode verarbeitbar ist,
um eine Anziehungskraft zu modellieren, welche die Entitäten (2) zu einem vorbestimmten Sektor (4) des Graphen (1) abhängig von ihrer Entitätenart anzieht, und
eine Mehrzahl von Repulsorcodes, wobei jeder Repulsorcode verarbeitbar ist,
um eine Abstoßungskraft zwischen einem Paar Entitäten (2) zu modellieren,
die dem vorbestimmten Sektor (4) zugeteilt sind,
wobei der Attraktor- und der Repulsorcode so verarbeitbar sind, dass die Lage jeder Entität an dem Graphen (1) durch die Summe von Anziehungs- und Abstoßungskräften bestimmt wird, die auf die Entität (2) wirken;
wobei der Computer **dadurch gekennzeichnet ist, dass**
der Darstellungscode so verarbeitbar ist, dass vor dem Explodieren des ersten Gruppenknotens (9) ansprechend auf den ersten vorbestimmten Reiz der erste Gruppenknoten (9) eine Abstoßungskraft proportional zu der Anzahl von Entitäten erhöht, die einzusetzen und anzuzeigen sind, wobei das Einsetzen von Entitäten beginnt, wenn sich die Nachbarknoten ausreichend weit weg bewegt haben; und
wobei der Darstellungscode ansprechend auf den ersten vorbestimmten Reiz verarbeitbar ist, um zu bewirken, dass der Gruppenknoten (9) in dem Graphen bleibt, um die gemeinsame Beziehung (8) darzustellen.

7. Computer nach Anspruch 6, wobei die Entitäten (2) mit einer weiteren Entität (2) oder Knoten (9) über eine Verbindung verbunden sind, die eine Beziehung darstellt, die nicht allen Entitäten (2) gemeinsam sein muss, die mit dem ersten Gruppenknoten (9) verbunden sind.

8. Computer nach einem der vorhergehenden Ansprüche 6 oder 7, wobei
ein Speichermedium (22) einen darauf aufgezeichneten prozessorlesbaren Code aufweist, der verarbeitbar ist, um einen Visualisierungsgraphen (1) bereitzustellen, wobei der Code einen Anfragecode enthält, der verarbeitbar ist, um eine Anfrage an der Datenbank (24, 60) durchzuführen,
und wobei der Computer ferner umfasst
eine Ausgabevorrichtung (30) zum Ausgeben von zumindest zwei der Mehrzahl von Daten in der Form eines Visualisierungsgraphen (1), der die Ergebnisse der Anfrage darstellt, wobei der Graph (1) eine Fokusentität oder -knoten (10) aufweist, die bzw. der von einem Benutzer oder der Anfrage definiert wird, wobei der Code ferner Kontextcode enthält, der verarbeitbar ist, um Kontextinformationen auszudrücken, die verarbeitbar sind, um zumindest eine in den Ergebnissen auszugebende Entität und/oder Gruppenknoten (2, 9) zu bestimmen, die bzw. der indirekt die Fokusentität oder -knoten (10) betrifft.

9. Benutzerstation, umfassend Mittel, die betriebsfähig sind, das Verfahren nach einem der vorhergehenden Ansprüche 1-5 durchzuführen.

10. Programmspeichervorrichtung, die durch eine Verarbeitungseinrichtung lesbar ist, wobei die Vorrichtung ein Programm von Instruktionen verkörpert, die von dem Prozessor ausführbar sind, um die Schritte nach einem der Ansprüche 1-5 durchzuführen.

## Revendications

1. Procédé de fourniture d'un graphe de visualisation sur un ordinateur, comprenant les étapes consistant à :
stocker des données (24) correspondant à une pluralité d'entités (2), dans lequel un réseau sémantique inclut lesdites entités (2) et dans lequel lesdites entités (2) sont liées les unes aux autres par une pluralité de relations (8),
en réponse à une interrogation par rapport à une entité (2) sélectionnée parmi ladite pluralité d'entités (2), fournir un graphe de visualisation (1) représentant les résultats de ladite interrogation, et
représenter une pluralité d'entités (2) ayant une relation commune (8) comme un premier noeud de groupe (9) sur ledit graphe de visualisation (1), et en réponse à un stimulus prédéterminé faisant exploser le premier noeud de groupe (9),
provoquant de ce fait l'affichage desdites entités (2) comprises au niveau dudit premier noeud de groupe (9), et en réponse à un autre stimulus prédéterminé faisant s'effondrer le premier noeud de groupe (9), provoquant de ce fait la restructuration dudit graphe (1) de sorte que lesdites entités (2) affichées sont remplacées par ledit noeud de groupe (9),
le procédé comprenant en outre les étapes consistant à
fournir des attracteurs (3), chaque attracteur attirant lesdites entités (2) vers un secteur prédéterminé (4) du graphe (1) en fonction de leur type d'entité,
fournir des répulseurs exerçant une force répulsive entre chaque paire d'entités (2) attribuées au secteur prédéterminé (4),
dans lequel
l'emplacement de chaque entité sur ledit graphe (1) est déterminé par la somme des forces attractive et répulsive agissant sur l'entité (2) ;
ledit procédé étant **caractérisé en ce que**
avant de faire exploser le premier noeud de groupe (9) en réponse audit premier stimulus prédéterminé, le premier noeud de groupe (9) augmente la force répulsive proportionnellement au nombre d'entités devant être insérées et
affichées, dans lequel l'insertion d'entités commence lorsque les noeuds voisins se sont déplacés suffisamment loin ; et
dans lequel, en réponse audit premier stimulus prédéterminé, ledit noeud de groupe (9) reste dans ledit graphe (1) pour représenter ladite relation commune (8).

2. Procédé selon la revendication 1, dans lequel lesdites entités (2) ayant une relation commune (8) sont liées à une autre entité (2) ou un autre noeud (9) par le biais d'un lien qui représente une relation qui peut ne pas être commune à l'ensemble des entités (2) liées audit premier noeud de groupe (9).

3. Procédé selon l'une quelconque des revendications précédentes, comprenant l'étape supplémentaire consistant à :
dans lequel ledit graphe (1) a une entité ou un noeud cible (10) défini par un utilisateur ou ladite interrogation, et utiliser des informations de contexte pour déterminer au moins une entité et/ou un noeud de groupe (9) devant être émis dans lesdits résultats qui est indirectement lié à ladite entité ou ledit noeud cible (10).

4. Procédé selon l'une quelconque des revendications précédentes, comprenant les étapes supplémentaires consistant à sélectionner ces entités (2) parmi ladite pluralité d'entités ayant au moins une relation commune (8), formant de ce fait des groupes d'entités, chaque groupe d'entités comprenant des entités partageant au moins une relation commune, représenter chacun desdits groupes sur ledit graphe comme un noeud de groupe correspondant (9) et représenter uniquement les relations (8) que l'ensemble desdits noeuds de groupe (9) ont en commun.

5. Procédé selon l'une quelconque des revendications précédentes, dans lequel ladite étape de sélection inclut analyser lesdites relations (8) pour trouver ladite relation commune (8).

6. Ordinateur pour fournir un graphe de visualisation, ledit ordinateur comprenant :
un support de stockage (22) ayant du code lisible par un processeur enregistré en son sein, pouvant être traité pour fournir un graphe de visualisation,
une base de données (24, 60) pour stocker des données (24) correspondant à une pluralité d'entités (2), dans lequel un réseau sémantique inclut lesdites entités (2) et dans lequel lesdites entités (2) sont liées les unes aux autres par une pluralité de relations (8),
une interface d'interrogation (40, 42) adaptée de sorte qu'en réponse à une interrogation par rapport à une entité (2) sélectionnée parmi ladite pluralité d'entités (2), un graphe de visualisation (1) est fourni représentant les résultats de ladite interrogation, dans lequel
ledit ordinateur comprend un code incluant :
du code de représentation pouvant être traité pour représenter une pluralité d'entités ayant une relation commune (8) comme un premier noeud de groupe (9) sur ledit graphe de visualisation (1), et en réponse à un stimulus prédéterminé faisant exploser le premier noeud de groupe (9), provoquant de ce fait l'affichage desdites entités (2) comprises au niveau dudit noeud de groupe (9), et en réponse à un autre stimulus prédéterminé faisant s'effondrer le premier noeud de groupe (9), provoquant la restructuration dudit graphe (1) de sorte que lesdites entités (2) affichées sont remplacées par ledit noeud de groupe (9),
du code d'attribution pouvant être traité pour attribuer l'entité à un secteur prédéterminé d'un graphe en fonction de son type d'entité, le code d'attribution comprenant
une pluralité de codes attracteurs, chaque code attracteur pouvant être traité pour modéliser une force attractive qui attire lesdites entités (2) vers un secteur prédéterminé (4) du graphe (1) en fonction de leur type d'entité, et
une pluralité de codes répulseurs, chaque code répulseur pouvant être traité pour modéliser une force répulsive entre chaque paire d'entités (2) attribuées au secteur prédéterminé (4),
le code attracteur et répulseur pouvant être traité de sorte que l'emplacement de chaque entité sur ledit graphe (1) est déterminé par la somme des forces attractive et répulsive agissant sur l'entité (2) ;
ledit ordinateur étant **caractérisé en ce que** le code de représentation peut être traité de sorte qu'avant de faire exploser le premier noeud de groupe (9) en réponse audit premier stimulus prédéterminé, le premier noeud de groupe (9) augmente la force répulsive proportionnellement au nombre d'entités devant être insérées et affichées, dans lequel l'insertion d'entités commence lorsque les noeuds voisins se sont déplacés suffisamment loin ; et
dans lequel ledit code de représentation peut être traité en réponse audit premier stimulus prédéterminé pour amener ledit noeud (9) à rester dans ledit graphe pour représenter ladite relation commune (8).

7. Ordinateur selon la revendication 6, dans lequel lesdites entités (2) sont liées à une autre entité (2) ou un autre noeud (9) par le biais d'un lien qui représente une relation qui peut ne pas être commune à l'ensemble des entités (2) liées audit premier noeud (9).

8. Ordinateur selon l'une quelconque des revendications précédentes 6 ou 7, dans lequel
le support de stockage (22) ayant du code lisible par un processeur enregistré en son sein, pouvant être traité pour fournir un graphe de visualisation (1), ledit code incluant un code d'interrogation pouvant être traité pour réaliser une interrogation sur ladite base de données (24, 60),
et dans lequel ledit ordinateur comprend en outre
un dispositif de sortie (30) pour émettre au moins deux de ladite pluralité de données sous la forme d'un graphe de visualisation (1) représentant les résultats de ladite interrogation, dans lequel ledit graphe (1) a une entité ou un noeud cible (10) défini par un utilisateur ou ladite interrogation, dans lequel ledit code inclut en outre du code de contexte pouvant être traité pour exprimer des informations de contexte qui peut être traité pour déterminer au moins une entité et/ou un noeud de groupe (2, 9) devant être émis dans lesdits résultats qui est indirectement lié à ladite entité ou ledit noeud cible (10).

9. Terminal d'utilisateur comprenant des moyens pouvant opérer pour réaliser le procédé selon l'une quelconque des revendications précédentes 1 à 5.

10. Dispositif de stockage de programme lisible par un appareil de traitement, ledit dispositif mettant en oeuvre un programme d'instructions pouvant être exécuté par le processeur pour réaliser les étapes selon l'une quelconque des revendications 1 à 5.
